# EUROPEAN PATENT APPLICATION

(11) **EP 1 055 495 A2**
(43) Date of publication of application: **29.11.2000**
(21) Application number: 00110594.9
(22) Date of filing: 18.05.2000
(51) Int. Cl.: B28B 3/26, B28B 21/54, F27D 3/02, B65G 39/00

(54) **Method for forming conveying rollers for ceramic kilns, apparatus for implementing the method and roller obtained with the apparatus**

(30) Priority: 21.05.1999 IT VE990026
(71) Applicant: Keratech S.R.L., 34076 Romans D'Isonzo (IT)
(72) Inventor: Pegoraro, Cesare, c/o Keratech S.R.L., 34076 Romans D'Isonzo (IT)
(74) Representative: Piovesana, Paolo

(57) **Abstract**

A roller forming method, characterised by subjecting the roller (18), at the extruder exit (2), to at least a radial plastic expansion and to at least a radial shrinking so as to vary its cross-section at least in certain regions (34) along its lengths.

## Description

This invention relates to a method for forming conveying rollers for ceramic kilns, an apparatus for implementing the method, and a roller obtained with the apparatus.

Hollow rollers are known for use in firing kilns for conveying ceramic material, such as tiles.

These rollers, which are formed by extruding a mix of refractory ceramic material, such as mullite corundum, are positioned side by side in an equidistant parallel coplanar arrangement to form a table on which adjacent rows of tiles are placed.

When used within a kiln, these known rollers have the drawback of a non-uniform tile advancement due both to constructional aspects and to stressing by the tiles.

With regard to the constructional aspects, the rollers are generally frusto-conical and as they are mounted within the kiln with their larger diameter positioned alternately on one side and the other, the mean diameter at their ends is greater than the diameter at their centre. This diameter difference means that the end portion of the rollers rotates with a greater peripheral speed than the central portion, with the result that the tiles of the same row have a tendency to advance more quickly at the ends with consequent formation of a curved line with its concavity facing the kiln exit.

This abnormal advancement can be accepted in low productivity kilns as it does not result in contact between the tiles but only a certain mutual approach, however it is unacceptable in kilns with large-dimension rollers, for example of 3-4 m, in which the different speed of advancement causes the tiles to undergo mutual contact, with resultant damage.

With regard to external stressing, under the load of the tiles each roller undergoes flexural deformation which increases from the ends to the centre, this deformation causing the tiles to advance at a speed which increases from the centre to the periphery as in the preceding case.

The object of the invention is to eliminate these drawbacks by providing a method enabling a roller to be formed of such a shape that the tiles advance with constant speed along the same row.

This object is attained according to the invention by a roller forming method as described in claim 1.

A preferred embodiment and a variant thereof are described in detail hereinafter with reference to the accompanying drawings on which:
- Figure 1: is a schematic longitudinal section through an apparatus for implementing the method of the invention,
- Figure 2: is a detailed view of the divaricating system,
- Figure 3: is a longitudinal section through a second embodiment of the apparatus,
- Figure 4: shows a roller obtained through the method, and
- Figure 5: shows it in a different embodiment.

As can be seen from the figures, the method of the invention uses an extruder head 2 positioned downstream of the transport screw for the refractory ceramic material in the plastic state, and defining an outwardly diverging annular channel 4.

Downstream of said head there is provided a bush 6 comprising two annular rows of channels 8 housing steel balls 10. Said head houses internally a mandrel 12 consisting of two frusto-conical pieces 14 diverging towards the head exit and rigid with the rod 16 of a hydraulic cylinder-piston unit (not shown).

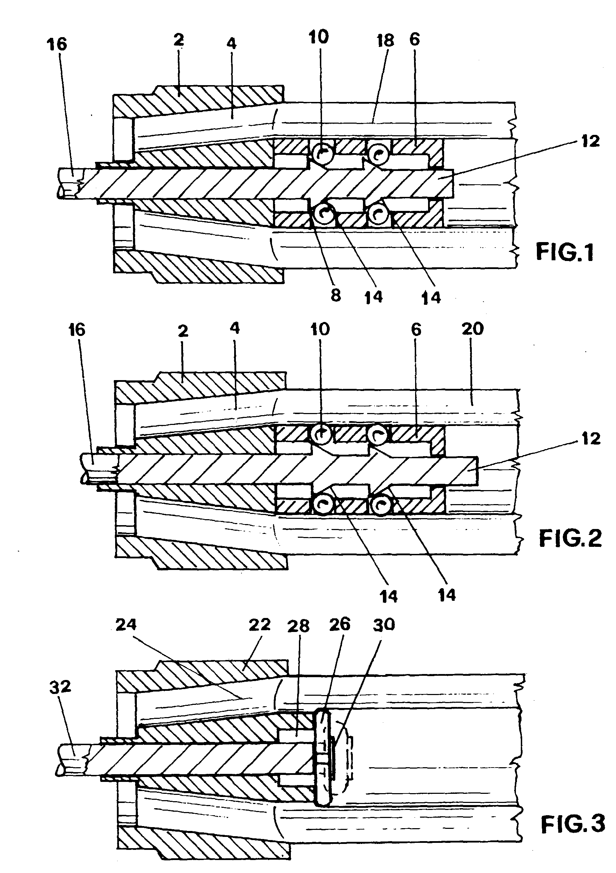

The apparatus of the invention operates in the following manner. Under normal conditions the balls 10 are completely housed within the channels 8 (see Figure 1) and in this configuration the outer diameter of the bush 6 corresponds substantially to the inner exit diameter of the head 2. Consequently during the extrusion stage the ceramic material leaving the head forms a tubular roller 18 of constant cross-section with its outer diameter corresponding to the outer diameter of the mouth of the head 2.

At the moment in which the rod 16 is made to emerge from the hydraulic cylinder-piston unit, the frusto-conical pieces 14, as a result of interference with the balls 10, cause these latter to partly emerge radially from the channels 8, these balls forming by virtue of the outer diameter of their overall outline a sort of cylindrical body having its outer diameter greater than the initial outer diameter of the bush 6. Consequently the material leaving the head 2 through the channel 4 and still in the plastic state is expanded radially to form a roller portion 20 of greater outer diameter than the roller previously formed (see Figure 2).

It is apparent that the stepwise advancement of the rod 16 causes a corresponding stepwise exit of the balls 10 from the channels 8, with the formation of a roller of gradually increasing diameter.

When the hydraulic system causes the rod to retract stepwise, the frusto-conical portions 14 interact increasingly less with the balls 10 as they retract into their channels 8 so that the ceramic material leaving the head 2 gradually encounters a bush the outer diameter of which varies moment by moment in the sense of decreasing until it reaches its initial outer diameter.

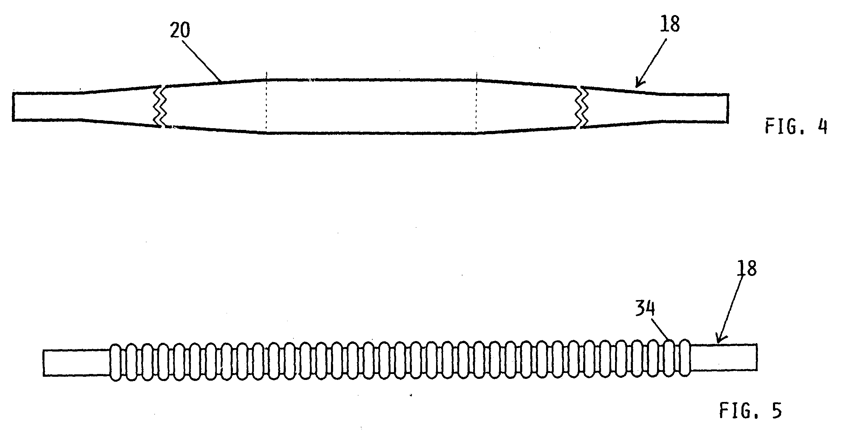

Hence the roller obtained during this stage has a decreasing outer diameter to produce a roller tapering towards each end (see Figure 4).

The roller obtained in this manner, when mounted together with others within a kiln has a speed greater at its centre than at its periphery, with evident elimination of the drawbacks presented by traditional rollers.

In the embodiment shown in Figure 3, the apparatus of the invention comprises a head 22 provided with an annular channel 24, at the exit of which there is provided a disc-shaped rubber piece26 retained between two elements, of which one 28 is fixed and the other 30 is movable.

Said elements are traversed by the rod 32 of hydraulic cylinder-piston unit (not shown on the drawings), engaged in a plate 36.

It is apparent that when the rod 32 retracts into the cylinder the disc-shaped piece 26 is compressed, with consequent radial expansion having the effect of expanding the diameter of the roller leaving the head 2 and the formation of a roller tapering towards both ends as in the preceding case.

In the embodiment shows in Figure 5 the roller 18 is provided with a plurality of ribs 34 and is obtained through repetitive advancements and retractions of the rod 16.

## Claims

1. A roller forming method, characterised by subjecting the roller, at the extruder exit, to at least a radial plastic expansion and to at least a radial shrinking so as to vary its cross-section at least in certain regions along its lengths.

2. A method as claimed in claim 1, characterised by firstly subjecting the roller to continuous radial expansion for a certain period of time and then returning it to its initial state in a period of time equal to the preceding.

3. An apparatus for implementing the method claimed in claims 1 and 2, characterised by comprising an extrusion head (2,22), at the exit of which there are provided radially expandable means (10,26) acting on the inner surface of the roller under formation, to cause certain regions of this latter to expand radially.

4. An apparatus as claimed in claim 3, characterised in that said means consist of a bush (6) comprising a plurality of channels (8) housing balls (10) movable between a position in which they are housed in the interior of the channels (8) and a position in which they partially emerge from these latter.

5. An apparatus as claimed in claim 4, characterised by comprising in the interior of the bush (6) a frusto-conical piece (14) movable longitudinally in the sense of causing the balls (10) to emerge from and retract into the channels.

6. An apparatus as claimed in claim 5, characterised in that the frusto-conical piece (14) is rigid with the rod (16) of a hydraulic cylinder-piston unit.

7. An apparatus as claimed in claim 3, characterised in that the expandable means consist of a disc-shaped rubber piece (26) retained between two end plates (28,30).

8. A roller obtained by the method claimed in claim 1 and 2, characterised in that at least two sections have different diameters.

9. A roller as claimed in claim 8, characterised by tapering towards each end.

10. A roller as claimed in claim 8 characterised by being provided with a plurality of ribs (34).
